# EUROPÄISCHE PATENTSCHRIFT

(11) **EP 1 426 584 B1**
(45) Veröffentlichungstag und Bekanntmachung des Hinweises auf die Patenterteilung: **26.10.2005**
(21) Anmeldenummer: 03027353.6
(22) Anmeldetag: 27.11.2003
(51) Int. Cl.: F02B 75/04

(54) **Pleuel zur Verwendung an einer Hubkolbenmaschine mit veränderbar einstellbarem Verdichtungsverhältnis**
Connecting rod for reciprocating piston machine with variable adjustable compression ratio
Bielle pour machine à pistons alternatifs avec taux de compression variablement réglable

(30) Priorität: 27.11.2002 DE 10255299
(43) Veröffentlichungstag der Anmeldung: 09.06.2004
(73) Patentinhaber: FEV Motorentechnik GmbH, 52078 Aachen (DE)
(72) Erfinder: Wittek, Karsten, Dipl.-Ing., 52072 Aachen (DE)
(74) Vertreter: Schulz, Björn

(56) Entgegenhaltungen:
- US-A- 4 721 073
- US-A- 4 830 517
- US-A- 5 417 185
- US-A- 5 724 935

## Beschreibung

Bei Kolbenmaschinen, insbesondere bei Kolbenbrennkraftmaschinen, ist es erwünscht, im Betrieb das Verdichtungsverhältnis ändern zu können.

Bei Kolbenbrennkraftmaschinen wirkt sich ein hohes Verdichtungsverhältnis grundsätzlich positiv auf den Wirkungsgrad aus. Bei Kolbenbrennkraftmaschinen mit Fremdzündung, nachstehend Ottomotor genannt, die ein fester Verdichtungsverhältnis aufweisen, darf das Verdichtungsverhältnis nur so hoch gewählt werden, daß bei Vollastbetrieb ein "Klopfen" vermieden wird. Für den weitaus häufiger auftretenden Teillastbetrieb, also bei geringer Füllung, könnte ein Verdichtungsverhältnis mit höheren Werten gewählt werden, ohne daß ein "Klopfen" auftreten würde. Das bedeutet, daß der wichtige Teillastwirkungsgrad bei einem Ottomotor verbessert werden könnte, wenn das Verdichtungsverhältnis variabel einstellbar wäre. Damit wäre es möglich, bei Vollast den Ottomotor mit einem niedrigen Verdichtungsverhältnis und bei Teillast bei einem höheren Verdichtungsverhältnis zu betreiben. Da bei aufgeladenen Ottomotoren das Verdichtungsverhältnis im allgemeinen niedriger gewählt werden muß, als bei Saugmotoren, wäre bei aufgeladenem Motor der zu erzielende Vorteil eines variablen Verdichtungsverhältnisses entsprechend größer.

Bei einer Kolbenbrennkraftmaschine mit Selbstzündung, nachstehend Dieselmotor genannt, wäre es ebenfalls von Vorteil, das Verdichtungsverhältnis variabel zu gestalten. Für den Motorstart wäre ein höheres Verdichtungsverhältnis vorteilhaft, während für den normalen Motorbetrieb das Verdichtungsverhältnis verringert werden könnte, um die Bauteilbelastung entsprechend zu verringern.

Aus DE-U-292 19 343 ist es für eine Kolbenbrennkraftmaschine bekannt, zur Veränderung des Verdichtungsverhältnisses die Kurbelwelle exzentrisch in Lagerringen zu lagern, die ihrerseits im Motorblock verdrehbar gelagert sind und die entsprechend über einen Stellantrieb verschwenkt werden können.

Aus DE-A-100 26 634 ist es bekannt, statt einer exzentrischen Lagerung der Kurbelwelle eine exzentrische Lagerung jeweils der Kolben am Pleuel vorzusehen. Hierbei ist der Kolbenbolzen in einem Exzenterring gelagert, der seinerseits verdrehbar im Kolbenbolzenauge des Pleuels gelagert ist. Der Exzenterring ist fest mit einem Schwenkhebel verbunden, der über eine daran angelenkte und nach außen geführte Stellstange mit Hilfe eines entsprechenden Stellantriebes verschwenkbar ist. Schwenkhebel und Stellstange führen zu einer nicht mehr vernachlässigbaren Erhöhung der bewegten Masse, so daß höhere Massenkräfte zu beherrschen sind.

Aus DE-A-197 57 871 ist eine Anordnung bekannt, bei der im Kolbenbolzenauge ein Exzenterring gelagert ist, der am Außenumfang zwei um 90° versetzte Rastflächen aufweist. Am Kolbenbolzenauge ist ferner ein Riegelkörper gelagert, der über einen an der Pleuelstange gelagerten Schwenkhebel radial in Richtung auf den Exzenterring hin und her bewegbar ist und so jeweils mit den Rastflächen am Exzenterring ver- und entriegelbar ist. Der Schwenkhebel ist mit einer Andruckfeder versehen, so daß im Betrieb die Verriegelung aufrechterhalten wird. Durch ein auf der Außenseite des Motors angeordnetes Stellmittel, beispielsweise eine Magnetspule oder auch ein mechanisches Stellmittel, kann der Verriegelungskörper außer Eingriff gebracht werden, so daß der Exzenterring mit dem Kolben sich relativ zum Pleuel verdrehen kann und wieder verriegelbar ist.

Aus DE-A-38 18 357 ist eine ähnliche Anordnung bekannt, bei der jedoch als Sperrkörper am Kolbenbolzenauage zwei Kolbenkörper vorgesehen sind, die über Druckkanäle in der Pleuelstange mit unterschiedlichen Öldrücken beaufschlagbar sind und so den zugehörigen Exzenterring in der einen oder anderen Stellung verriegelt.

Der Erfindung liegt die Aufgabe zugrunde, einen Pleuel für eine Kolbenmaschine, insbesondere eine Kolbenbrennkraftmaschine zu schaffen, der eine Veränderung des Verdichtungsverhältnisses im Betrieb ermöglicht und der es erlaubt, die notwendigen konstruktiven Veränderungen an einer existierenden konventionellen Motorkonstruktion auf ein Minimum zu reduzieren, so daß die Hauptabmessungen der Kolbenbrennkraftmaschine praktisch unverändert bleiben.

Diese Aufgabe wird gemäß der Erfindung gelöst durch ein Pleuel zur Verwendung an einer Hubkolbenmaschine mit veränderbar einstellbarem Verdichtungsverhältnis, mit einer Pleuelstange, die an einem Ende ein Hubzapfenlagerauge und am anderen Ende ein Kolbenbolzenlagerauge aufweist, mit dem ein Kolben über einen Kolbenbolzen verbindbar ist, der mit seiner Bolzenachse unter einer Exzentrizität e exzentrisch zur Achse des Kolbenbolzenlagerauges in einem Exzenterring gelagert ist, der um einen vorgegebenen Schwenkbereich frei unter Nutzung der freiwirkenden Massenkräfte hin und her drehbar im Kolbenbolzenlagerauge gelagert ist, mit an der Pleuelstange gelagerten Verriegelungsmitteln zur wahlweisen Fixierung des Exzenterringes in der einen oder anderen Endstellung des Schwenkbereichs und mit von außen über ein Einwirkelement einer Aktuatoreinrichtung betätigbaren mechanischen Stellmitteln, die mit den Verriegelungsmitteln in Wirkverbindung stehen. Ein derart ausgebildetes Pleuel bietet den Vorteil, daß der Motorblock praktisch unverändert bleibt und lediglich die Einwirkelemente und die Aktuatoreinrichtung zusätzlich vorzusehen ist, was bei der Serienfertigung durch einfache Änderungen an den Gießformen bewirkt werden kann.

In zweckmäßiger Ausgestaltung der Erfindung ist vorgesehen, daß der Schwenkbereich des Exzenterringes in bezug auf die Längsachse der Pleuelstange so positioniert ist, daß die durch die Exzentrizität e vorgegebene Verbindungslinie zwischen der Achse des Kolbenbolzenlagerauges und der Bolzenachse in jeder Endlagenstellung des Exzenterringes unter einem Winkel zur Längsachse der Pleuelstange ausgerichtet ist. Hierdurch wird bewirkt, daß nach dem Lösen der Verriegelungsmittel durch die auf den Kolben wirkenden Gaskräfte und insbesondere die jeweils im oberen und unteren Totpunkt auf den Kolben wirkenden Massenkräfte zum Verdrehen des Exzenterringes und damit zur Verstellung von der einen in die andere Endlage des Schwenkbereichs ausgenutzt werden. Zur Veränderung des Verdichtungsverhältnisses werden daher nur geringe Aktuatorkräfte zur Betätigung des Einwirkelementes benötigt.

In einer bevorzugten Ausgestaltung der Erfindung ist vorgesehen, daß die Verriegelungsmittel zwei am Exzenterring angeordnete Endanschläge und wenigstens eine an der Pleuelstange schwenkbar gelagerte Sperrklinke aufweisen. Die Sperrklinke kann hierbei so ausgebildet sein, daß sie jeweils in eine von zwei den Schwenkbereich begrenzende, die Endanschläge bildende Ausnehmungen am Exzenterring in Eingriff bringbar ist.

In besondere vorteilhafter Ausgestaltung der Erfindung ist vorgesehen, daß am Exzenterring zwei jeweils den Schwenkbereich begrenzende Endanschläge und an der Pleuelstange zwei Sperrklinken angeordnet sind, die in ihrer Sperrwirkung gegeneinander gerichtet sind, wobei jeweils eine Sperrklinke mit einem Endanschlag wahlweise in Eingriff bringbar ist. Bei entsprechender Ausgestaltung der Sperrklinkenanordnung ist es hierbei möglich, nur durch einen Anstoß über das Einwirkelement jeweils eine Sperrklinke außer Eingriff zu bringen, so daß der Exzenterring sich unter dem Einfluß von Massen- und/oder Gaskräften verdreht und daß dann die andere Sperrklinke in Eingriff kommt. Zweckmäßig ist es hierbei, wenn die Sperrklinken jeweils mit einer Andruckfeder in Wirkverbindung stehen, deren Andruckkraft gegen den Exzenterring gerichtet ist.

Gemäß einer Weiterbildung ist vorgesehen, eine Form von zumindest einer Sperrklinke so zu wählen, daß ihr Massenschwerpunkt möglichst nahe ihrer Drehachse liegt. Bevorzugt ist es, wenn der Massenschwerpunkt genau in der Drehachse liegt. Liegt der Massenschwerpunkt in der Drehachse bzw. sehr nahe an dieser, gelingt es, daß um die Drehachse der Klinke keinerlei bzw. nur sehr geringe Momente auftreten. Diese Momente können aufgrund von Trägheitskräften entstehen. Durch das vorzugsweise Zusammenfallen von Massenschwerpunkt und Drehachse der Klinke kann eine Feder, welche die Klinke gegen den Exzenter drückt, schwächer ausgeführt werden. Gleiches gilt auch für jedes andere Rückstellmittel, welches anstatt der Feder genutzt werden kann. Das Rückstellmittel, insbesondere die Feder, muß somit nicht mehr verhindern, daß die Klinke ungewollte Bewegungen aufgrund von Trägheitskräften ausführt.

Eine weitere Ausgestaltung sieht für einen Exzenter des Pleuels vor, eine bei einem Aufschlag abzufangende kinetische Energie mittels eines Dämpfungselementes abzubauen. Vorzugsweise wird hierzu ein hydraulisches Dämpfungselement eingesetzt. Die kinetische Energie aufgrund der Drehbewegung wird beispielsweise impulsförmig, d.h. stoßförmig übertragen, wenn der Exzenter gegen einen festen Endanschlag anschlägt. Durch die Verwendung des Dämpfungselementes kann insbesondere ein Zurückspringen des Exzenters verhindert werden. Zum anderen kann eine vorzugsweise einstellbare Dämpfungseigenschaft des Dämpfungselementes genutzt werden, um eine gezielte Bewegung des Exzenters in der Endphase während des Endanschlages aufzuprägen. Gemäß einer Ausgestaltung ist hierzu vorgesehen, daß zumindest ein Dämpferkolben im Pleuel angeordnet ist. Ein Raum unterhalb des Dämpferkolbens steht mit einer Leitung, beispielsweise mit einer Steigleitung im Pleuelschaft über eine vorzugsweise kalibrierte Öffnung, insbesondere Bohrung in Verbindung. Befindet sich der Exzenter an einer Seite gerade nicht an einem festen Endanschlag, so kann der Raum unterhalb des Dämpferkolbens mit einer Dämpfungsflüssigkeit, insbesondere Öl, gefüllt werden. Hierbei fährt der Dämpferkolben aus. Nähert sich der Exzenter nun diesem Anschlag, wird das Öl durch die kalibrierte Bohrung geschoben, die den Raum unterhalb des Dämpferkolbens mit der Steigleitung verbindet. Die Kalibrierung der Bohrung ist derart, daß eine gewünschte Dämpfungscharakteristik eingestellt wird. Gemäß einer Ausgestaltung ist vorgesehen, daß die Bohrung so ausgeführt ist, daß ihre Länge im Verhältnis zu ihrem Durchmesser sehr klein ist. Insbesondere ist das Verhältnis derart, daß ein Strömungswiederstand der Bohrung dem einer Blende ähnelt, insbesondere in einem Bereich von mindestens 95% des Verhaltens einer entsprechenden Blende liegt. Aufgrund einer Kalibrierung der Bohrung gelingt es beispielsweise, daß ein Druckabfall an der Bohrung als Widerstand zumindest annähernd quadratisch mit einer Kolbengeschwindigkeit zunimmt. Auf diese Weise ist es möglich, eine Dämpferwirkung um so stärker zu erhalten, je größer eine Exzenterauftreffgeschwindigkeit ist. Insbesondere kann dadurch ein gleichförmiges tiefes Eintauchen des Dämpferkolbens folgen, unabhängig von einer Anfangsgeschwindigkeit, mit der der Exzenter auf den Kolben aufschlägt.

Gemäß einer weiteren Ausgestaltung ist vorgesehen, daß der Exzenter über zwei Lagerringe im kleinen Pleuel gelagert ist. Vorzugsweise sind ein Exzenter-Außendurchmesser und ein Außendurchmesser der Lagerringe jeweils zumindest annähernd gleich. Insbesondere ist vorgesehen, daß zumindest eine der Lagerflächen, vorzugsweise beide Lagerflächen radial eingezogen sind. Insbesondere sind die Lagerflächen derart radial nach Innen eingezogen, daß sich ein Massenträgheitsmoment des Exzenters verringern läßt. Auf diese Weise sind nur geringe Kräfte, insbesondere Momente erforderlich, um den Exzenter zu beschleunigen. Aufgrund dessen reagiert der Exzenter empfindlicher gegenüber einer Anordnung der Lagerringe mit größerem radialen Durchmesser. Dies erlaubt eine größere Beschleunigung bei gleichen Kräften bzw. Momenten und somit ein schnelleres Erreichen einer Endlage durch den Exzenter.

Vorzugsweise wird gemäß einer weiteren Ausgestaltung ein Anschlag aus dem kleinen Pleuelauge herausgearbeitet. Dieser Anschlag ist dadurch stofflich mit dem übrigen Material des Pleuelauges verbunden. Dieser Anschlag weist damit eine besondere Festigkeit auf. Bei einem derartigen Anschlag wie auch bei anderen Ausgestaltungen des Pleuels kann es somit vorteilhaft sein, daß der Exzenter axial ins Pleuelauge eingeschoben wird. Anschließend können die Lagerringe aufgeschoben werden, um somit die Beweglichkeit des Exzenters im Pleuel zu gewährleisten. Auch können die Lagerringe zur Positionierung des Exzenters genutzt werden, insbesondere auch zur definierten Befestigung im Pleuelauge. Gemäß einer anderen Ausgestaltung ist vorgesehen, daß die Lagerringe schon auf dem Exzenter aufgeschoben sind und anschließend der Einbau von Exzenter und Lagerringen in das Pleuelauge erfolgt. Dieses ist beispielsweise möglich, wenn die Lagerringe unterschiedliche Durchmesser aufweisen.

Weitere vorteilhafte Ausgestaltungen der Erfindung sind den Ansprüchen sowie der nachfolgenden Beschreibung eines Ausführungsbeispiels zu entnehmen. Die Erfindung wird anhand von schematischen Zeichnungen näher erläutert. Es zeigen:
- Fig. 1: schematisch einen Zylinder mit einer Einstellung für ein niedriges Verdichtungsverhältnis,
- Fig. 2: schematisch den Zylinder gem. Fig. 1 mit einer Einstellung für ein hohes Verdichtungsverhältnis,
- Fig. 3: einen Pleuel in Vorderansicht entsprechend Fig. 1 mit erster und zweiter Sperrklinke,
- Fig. 4: eine perspektivische Ansicht des Pleuels gem. Fig. 3 in einer Rückenansicht zu Fig. 3,
- Fig. 5: eine Ansicht gem. Fig. 4 in größerem Maßstab,
- Fig. 6: eine vergrößerte perspektivische Darstellung einer Ausführungsform für eine zweite Sperrklinke,
- Fig. 7: ein zweites Pleuel mit einer Dämpfungseinrichtung,
- Fig. 8: eine Explosionsdarstellung eines Exzenters mit benachbarten Sperrklinken und Lagerringen und
- Fig. 9: ein drittes Pleuel mit einem integrierten Anschlag.

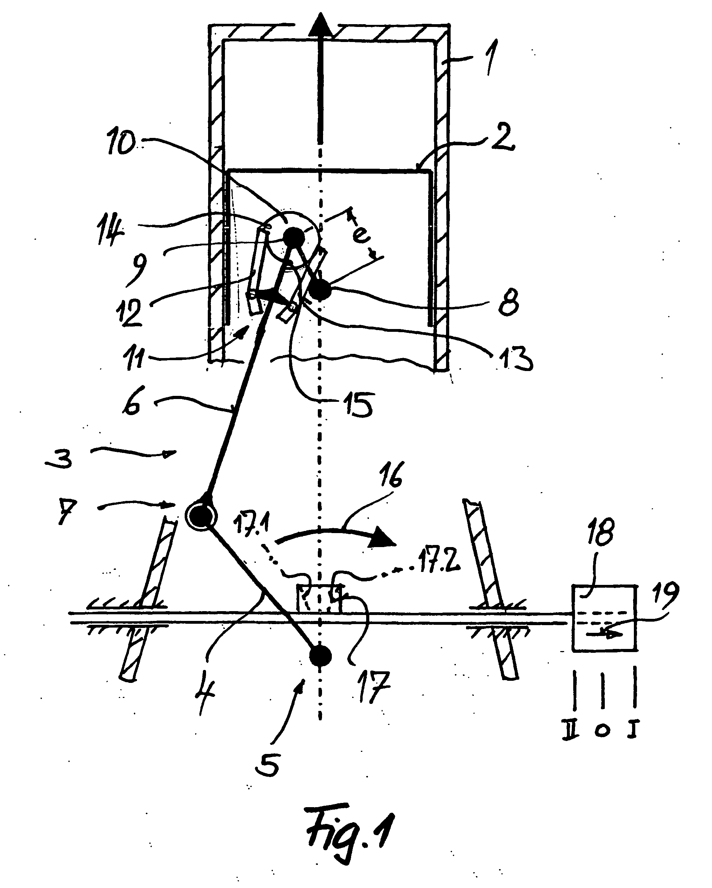

In Fig. 1 ist in einer schematischen Stirnansicht ein Zylinder 1 einer Hubkolbenmaschine dargestellt, in dem ein Kolben 2 auf und ab bewegbar geführt ist, der über ein Pleuel 3 mit einer Kurbel 4 einer Kurbelwelle 5 verbunden ist.

Das Pleuel 3 weist eine Pleuelstange 6 auf, die an einem Ende mit einem Hubzapfenlagerauge 7 an der Kurbel 4 gelagert ist und die am anderen Ende ein Kolbenbolzenlagerauge 9 aufweist, mit dem der Kolben 2 über einen Kolbenbolzen 8 verbunden ist. Der Kolbenbolzen 8 ist mit einer Exzentrizität e zur Achse des Kolbenbolzenlagerauges 9 in einem Exzenterring 10 gelagert, der um einen Schwenkbereich im Kolbenbolzenlagerauge 9 frei hin und her drehbar gelagert ist.

An der Pleuelstange 6 sind Verriegelungsmittel 11, hier in Form einer ersten Sperrklinke 12 und einer zweiten Sperrklinke 13 gelagert. Der Exzenterring 10 ist mit zwei Endanschlägen 14 und 15 versehen, deren Abstand zueinander dem vorgegebenen Schwenkbereich, beispielsweise einem Schwenkbereich von 90°, entspricht. In der dargestellten Positionierung steht die erste Sperrklinke 12 mit dem Endanschlag 14 in Sperrstellung, während die zweite Sperrklinke 13 außer Eingriff zum Endanschlag 15 steht. Die der Exzentrizität e entsprechende Verbindungslinie zwischen der Kolbenbolzenachse und der Achse des Kolbenbolzenlagers 9 ist hierbei unter einem Winkel zur Pleuelstange 6 auf die Kurbelwelle 5 weisend ausgerichtet. In dieser Stellung wird die Hubkolbenmaschine mit niedrigem Verdichtungsverhältnis betrieben.

Bei einer Verstellung auf ein hohes Verdichtungsverhältnis geht der nachstehend beschriebene Verstellvorgang von einer Drehrichtung der Kurbelwelle 5 in Richtung des Pfeiles 16 aus.

Den durch die beiden Sperrklinken 12 und 13 gebildeten Verriegelungsmitteln 11 ist in einem dem unteren Totpunktdurchgang zugeordneten Bereich des Kolbens 2 ein Einwirkelement 17 zugeordnet, das mit einer außenliegenden Aktuatoreinrichtung 18 betätigbar ist. Die Aktuatoreinrichtung 18 kann verschiedene Ausgestaltungen aufweisen. Beispielsweise kann zur Aktivierung eine Linearbewegung oder eine Kreisbewegung ausgeführt werden. Die Aktuatoreinrichtung kann über einen Schaltstein oder sonstige Betätigungsmittel verfügen. Beispielsweise wird zumindest ein Elektromagnet zur Erzeugung einer Linearbewegung genutzt. Eine andere Ausgestaltung sieht die Verwendung einer Zahnstange mit einem Ritzel zur Bewegungsübertragung vor. Eine weitere Ausgestaltung weist einen Hydraulikzylinder auf, über den eine Bewegung aufgeprägt wird. Auch kann ein Kniehebelmechanismus oder eine Schubkurbel eingesetzt werden. Im Normalbetrieb befindet sich das Einwirkelement 17 beispielsweise in einer Nullposition.

Soll nun aus der dargestellten Kolbenposition für ein niedriges Verdichtungsverhältnis dieses in eine Position für ein hohes Verdichtungsverhältnis überführt werden, dann wird durch Verschieben des Einwirkelementes 17 über den Aktuator 18, beispielsweise in Richtung des Pfeiles 19 in die Schaltstellung I, beim Durchlauf des Kolbens durch den unteren Totpunktbereich die erste Sperrklinke 12 außer Eingriff mit dem zugeordneten Endanschlag 15 gebracht.

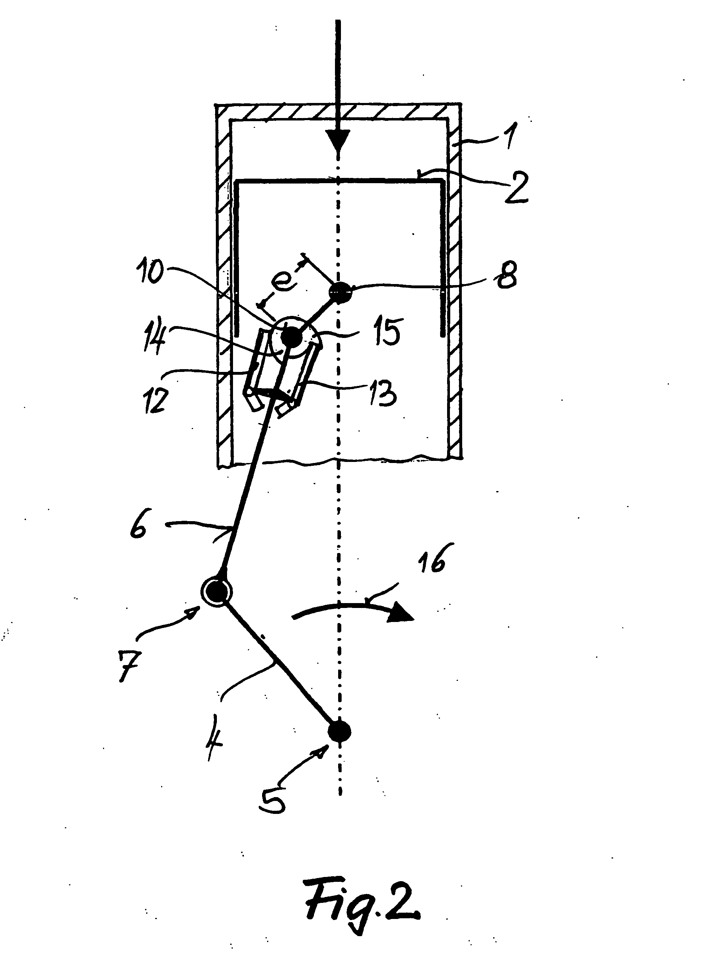

Wird hierbei die erste Sperrklinke 12 durch einen noch zu beschreibenden Verriegelungsmechanismus in der "Offenstellung" gegenüber der Pleuelstange 6 verriegelt, dann kann sich am Ende der Aufwärtsbewegung des Kolbens 2, d. h. beim Durchgang des Kolbens durch die obere Totpunktlage aufgrund der einwirkenden Massenkräfte der Exzenterring relativ zum Kolbenbolzenlagerauge 9 verdrehen, so daß die erste Sperrklinke 12 zuverlässig außer Eingriff bleibt und im Verlauf der weiteren Verdrehung des Exzenterringes 10 die zweite Sperrklinke 13 mit dem Anschlag 15 in Eingriff gebracht wird. Die erste Sperrklinke 12 bleibt hierbei in ihrer Offenstellung fixiert, so daß das Einwirkelement 17 in seine Nullposition zurückgesetzt werden kann. Der Kolbenbolzen 8 nimmt dann die in Fig. 2 dargestellte Endposition ein, in der die Hubkolbenmaschine dann mit höheren Verdichtungsverhältnis weiter betrieben werden kann. Die Verbindungslinie der Exzentrizität e ist hierbei unter einem Winkel zur Pleuelstange 6 gegen den Brennraum weisend ausgerichtet.

Soll nun wieder ein niedriges Verdichtungsverhältnis eingestellt werden, d. h. der Kolben aus seiner in Fig. 2 dargestellten Endposition in die in Fig. 1 dargestellte Position zurückgeführt werden, dann wird über die Aktuatoreinrichtung 18 das Einwirkelement 17 aus der Nullstellung in Gegenrichtung zum Pfeil 19 in die Schaltstellung II verschoben. Beim Durchlauf durch den unteren Totpunktbereich wird hierbei die zweite Sperrklinke 13 vom Endanschlag 15 gelöst, so daß die nach unten gerichteten Massenkräfte beim Durchgang durch den unteren Totpunkt bis hin zum oberen Totpunkt den Exzenterring 10 in Uhrzeigerrichtung verdrehen. Beim Aufheben der Sperrwirkung der zweiten Sperrklinke 13 wird gleichzeitig die Verriegelung für die erste Sperrklinke gelöst, so daß diese unter der Wirkung einer Andruckfeder an der Kontur des Exzenterringes 10 anliegt und mit dem Endanschlag 14 verrasten kann. Die zweite Sperrklinke 13 wird ebenfalls in ihrer Offenstellung fixiert.

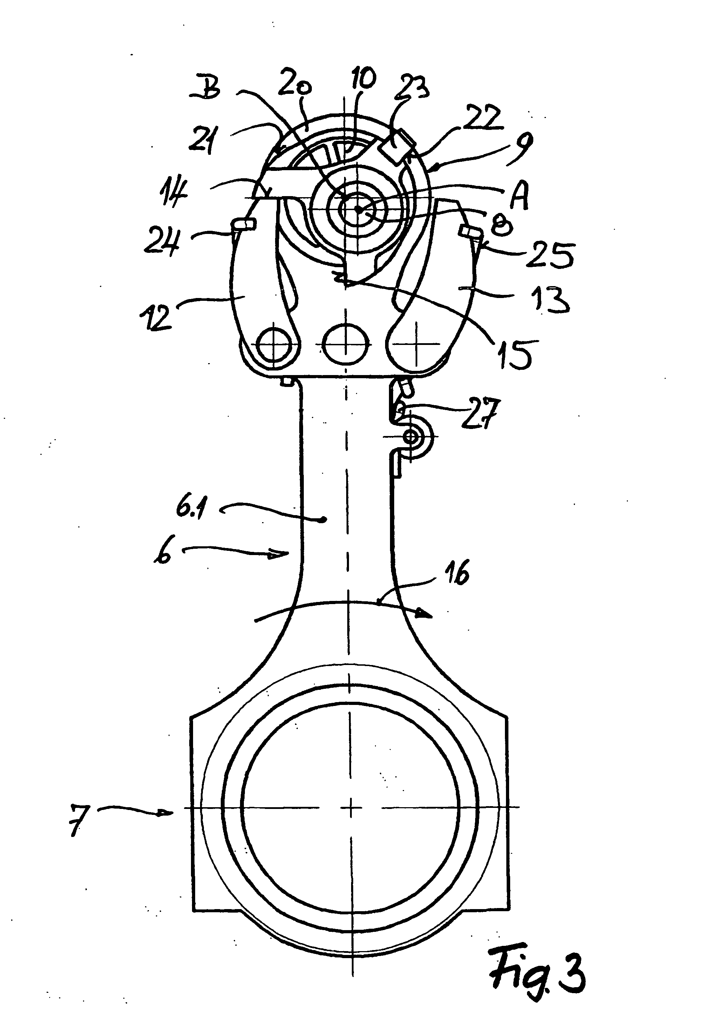

In Fig. 3 ist eine mögliche konstruktive Ausgestaltung eines Pleuels näher dargestellt und zwar in der gleichen Blickrichtung wie die Darstellung gem. Fig. 1, so daß sich die gleiche Zuordnung der ersten und der zweiten Sperrklinke zur Drehrichtung gem. Pfeil 16 ergibt.

Der im Kolbenbolzenlagerauge 9 gelagerte Exzenterring 10 ist mit den beiden Endanschlägen 14 und 15 versehen. Der Kolbenbolzen 8 ist mit einer Kolbenbolzenachse A exzentrisch zur Drehachse B des Exzenterringes im Exzenterring 10 gelagert. Das Kolbenbolzenlagerauge 9 weist ferner eine Ausnehmung 20 auf, die durch zwei Endflächen 21, 22 begrenzt ist und die den Schwenkbereich definieren. Den beiden Endflächen 21, 22 ist am Exzenterring 10 ein Stützzapfen 23 zugeordnet, der je nach Schwenkstellung des Exzenterringes 10 an der Endfläche 21 oder, wie hier dargestellt, an der Endfläche 22 anliegt.

Die erste Sperrklinke 12 ist an der Pleuelstange 6 schwenkbar gelagert und steht mit einer Andruckfeder 24 in Verbindung, deren Kraftwirkung gegen den Exzenterring 10 gerichtet ist.

Die ebenfalls schwenkbar gelagerte zweite Sperrklinke 13 steht mit einer Andruckfeder 25 in Verbindung, deren Kraftwirkung ebenfalls gegen den Exzenterring 10 gerichtet ist.

Wie nachstehend noch näher beschrieben, ist die zweite Sperrklinke 13 so an der Pleuelstange gelagert, daß sie in der dargestellten Offenposition gehalten wird.

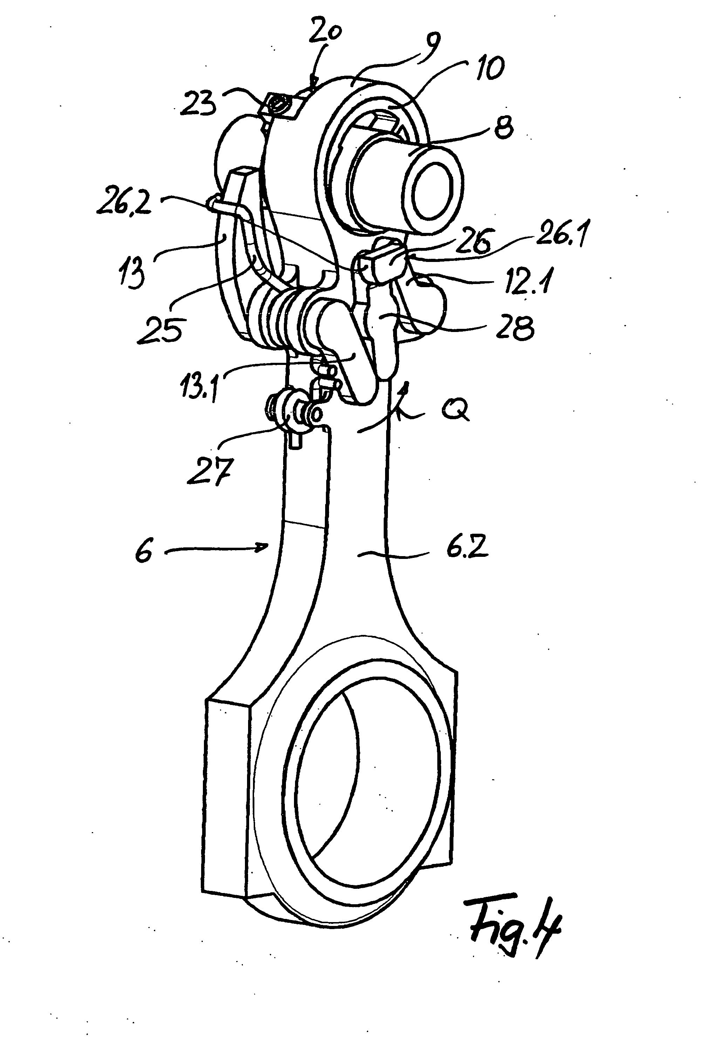

Fig. 4 zeigt eine perspektivische Rückenansicht zur Darstellung gem. Fig. 3. Gleiche Bauelemente sind mit gleichen Bezugszahlen versehen, so daß auf die vorstehende Beschreibung verwiesen werden kann. Der Pleuel ist in der gleichen Positionierung seiner Sperrklinken 12 und 13 wiedergegeben, wie in Fig. 3.

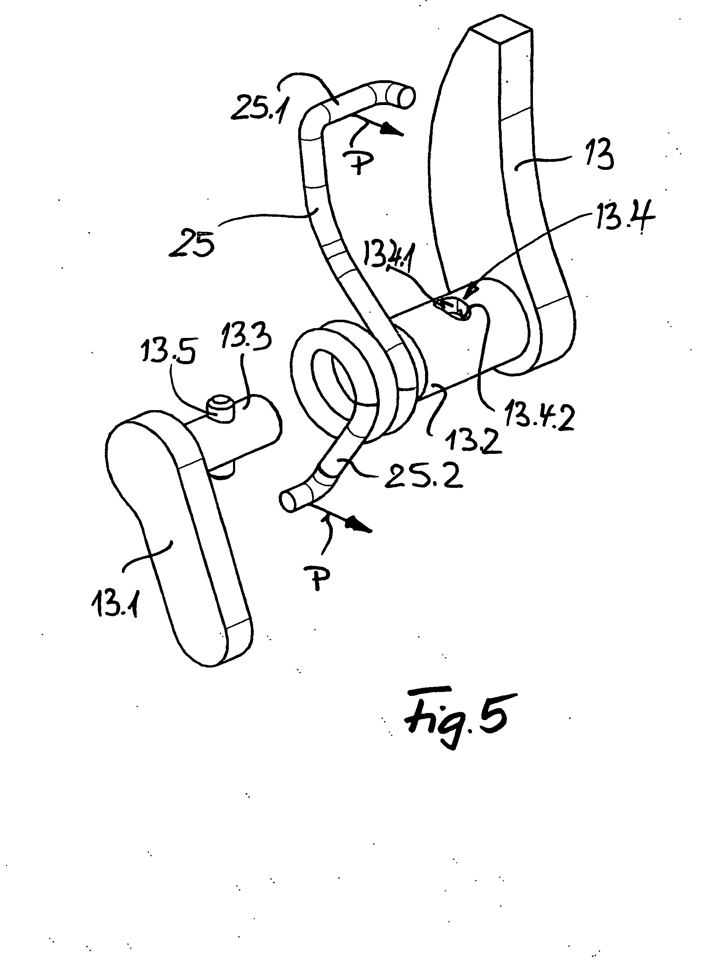

Die zweite Sperrklinke 13 ist an einem Übertragungshebel 13.1 beschränkt schwenkbar gelagert und zwar so, daß über die Andruckfeder 25 die Sperrklinke 13 und der Übertragungshebel 13.1 gegeneinander verspannt sind. Dies kann beispielsweise dadurch bewirkt werden daß, wie aus Fig. 5 ersichtlich, die zweite Sperrklinke 13 über eine Lagerhülse 13.2 auf einem entsprechenden Zapfen 13.3 am Übertragungshebel 13.1 gelagert ist. Durch wenigstens ein entsprechendes Langloch 13.4 in der Lagerhülse 13.3 und einen zugeordneten Sperrzapfen 13.5 am Lagerzapfen 13.3 ist die relative Verschwenkung zwischen der zweiten Sperrklinke 13 und dem zugeordneten Übertragungshebel 13.1 begrenzt. Das sich in Umfangsrichtung der Lagerhülse 13.2 erstreckende Langloch 13.4 weist Endflächen 13.4.1 und 13.4.2 auf, an denen je nach Positionierung der Anschlagzapfen 13.5 zur Anlage kommt. Die beiden Enden 25.1 bzw. 25.2 der Andruckfeder 25 liegen jeweils - bezogen auf die Darstellung in Fig. 5 - auf der Rückseite der zweiten Sperrklinke 13 bzw. des Übertragungshebels 13.1 an, so daß auf die beiden Teile jeweils eine Kraftwirkung in Richtung der Pfeile P ausgeübt wird.

Wie aus Fig. 4 ersichtlich, ist an der Pleuelstange 6 eine Rückstellfeder 27 angeordnet, die auf den Übertragungshebel 13.1 in Richtung des Pfeiles Q einwirkt.

Die erste Sperrklinke 12 ist starr mit einem Übertragungshebel 12.1 verbunden, der mit seinem freien Ende in Gegenrichtung zum freien Ende des Übertragungshebels 13.1 weist.

Zwischen den beiden Übertragungshebeln 12.1 und 13.1 ist ein doppelarmiger Stellhebel 28 angeordnet, der mit jeweils einem Arm an einem Übertragungshebel 12.1 bzw. 13.1 anliegt und der mit einem axial vorspringenden Nocken 26 versehen ist. Der Nocken 26 weist zu beiden Seiten jeweils eine Gleitfläche 26.1 und 26.2 auf, die jeweils mit einer entsprechenden Gegenfläche 17.1 bzw. 17.2 am Einwirkelement 17 in Wirkverbindung bringbar ist.

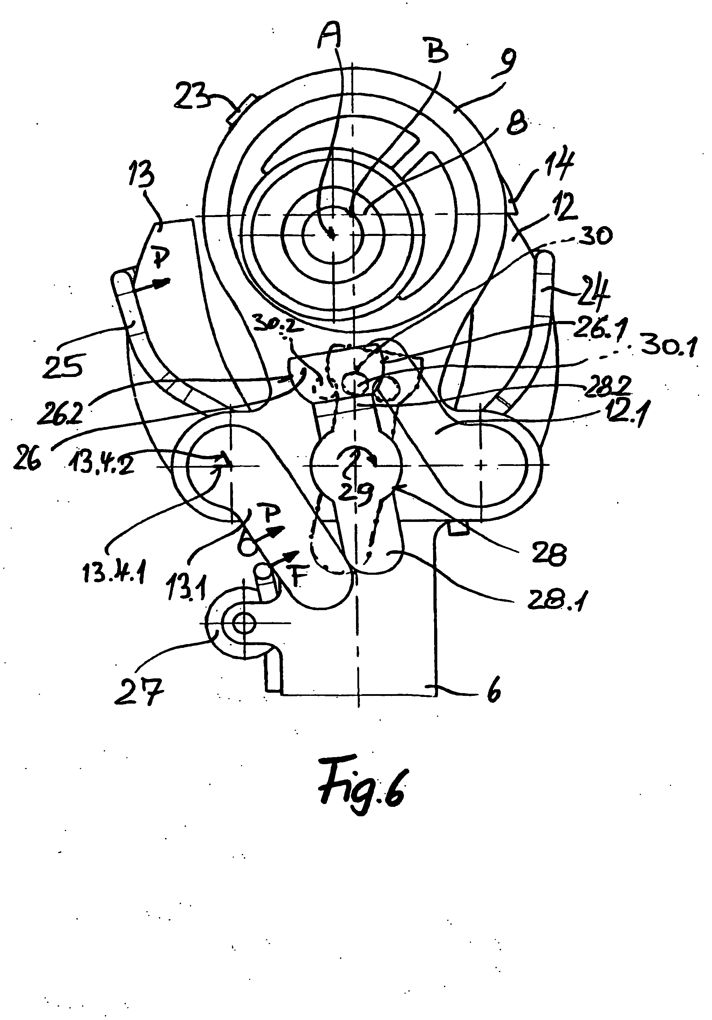

Für den Stellhebel 28 ist an seinem, dem freien Ende des Übertragungshebels 12.1 zugeordneten Ende an der Pleuelstange 6 ein vorzugsweise federbelastetes Rastelement 30 vorgesehen, daß, wie anhand von Fig. 6 noch erläutert wird, so ausgelegt ist, daß es jeweils bei Eingriffstellung der ersten Sperrklinke 12 oder bei Eingriffstellung der zweiten Sperrklinke 13 in Eingriff mit dem Stellhebel 28 steht.

Die Anordnung gem. Fig. 4 ist in Fig. 6 in vergrößerter Darstellung mit den gleichen Bezugszeichen wiedergegeben, so daß auf die vorstehenden Beschreibungen bezug genommen werden kann.

Fig. 6 zeigt die Anordnung in einer Rückenansicht zu Fig. 1 bzw. Fig. 3, d. h. mit in Eingriff befindlicher Sperrklinke 12. In Fig. 6 sind für den Übertragungshebel 13.1 die Anschlagfläche 13.4.1 und 13.4.2 des Langlochs 13.4 schematisch angedeutet. In der hier dargestellten Position liegt der Anschlagszapfen 13.5 an der Endfläche 13.4.1 an, da die Andruckfeder 25 mit ihrem an der Sperrklinke 13 anliegenden Ende einerseits und mit ihrem am Übertragungshebel 13.1 anliegenden Ende andererseits ihre Kräfte in Richtung der Pfeile P überträgt und so die Sperrklinke 13 und den Übertragungshebel 13.1 gegeneinander verspannt. Die Rückstellfeder 27 drückt hierbei den Übertragungshebel 13.1 ebenfalls in Richtung des Pfeiles F auf die Pleuelstange 6 zu, wobei die zweite Sperrklinke 13 mit der Kraft der Rückstellfeder 27 in der dargestellten Offenstellung gehalten wird.

Wird über den Nocken 26 der Stellhebel 28 in Richtung des Pfeiles 29 verdreht, wird der daran anliegende Übertragungshebel 13.1 in gleiche Richtung gegen die Kraft F der Rückstellfeder 27 ebenfalls im Uhrzeigersinn verdreht. Die Sperrklinke 13 kommt hierbei an dem Außenumfang des Exzenterringes 10 zur Anlage, wobei gegen die Kräfte P der Andruckfeder 25 die Sperrklinke entgegen dem Uhrzeigersinn in Richtung auf die Endfläche 13.4.2 relativ zum Übertragungshebel 13.1 verschwenkt wird.

Gleichzeitig wird über das andere Ende 28.2 des Übertragungshebels 28 der starr mit der ersten Sperrklinke 12 verbundene Übertragungshebel 12.1 ebenfalls im Uhrzeigersinn verschwenkt und gegen die Kraft der Andruckfeder 24 mit dem Endanschlag 14 außer Eingriff gebracht.

Unter Einwirkung der anhand von Fig. 1 und Fig. 2 beschriebenen Kraftwirkung der Massen- und Gaskräfte verdreht sich dann der Exzenterring 10, bezogen auf die Darstellung in Fig. 6, ebenfalls im Uhrzeigersinn, so daß diezunächst gegenüber dem Übertragungshebel 13.1 gegen die Kraft der Andruckfeder ausgelenkte und von der Andruckfeder 25 gegen die Umfangsfläche des Exzenterringes 10 gedrückte zweite Sperrklinke 13 beim Überlaufen des Endanschlags 15 einrasten kann.

Um sicherzustellen, daß der Exzenterring 10 sich auch unter Einwirkung der Massen- und Gaskräfte während der Stellungsbewegung außer Eingriff mit der jeweils "geöffneten" Sperrklinke 12 bzw. 13 bleibt, ist dem Stellhebel 28 an seinem dem Übertragungshebel 12.1 zugekehrten Ende 28.2 das vorstehend bereits erwähnte Rastelement 30 zugeordnet. Dies kann beispielsweise in Form einer druckfederbelasteten in der Pleuelstange 6 gelagerten Kugel und zwei entsprechenden Vertiefungen 30.1 und 30.2 im Stellhebel 28 gebildet werden. Die Haltekraft dieses Rastelementes muß so hoch sein, daß sie über die Kraft der Andruckfeder 24 bzw. der Rückstellfeder 27 allein nicht gelöst werden kann, sondern nur durch die Kraftwirkung des Stellhebels 28 überwunden werden kann, wenn dieser durch die über das Einwirkelement 17 und das Eingriffselement 26 entgegen dem Uhrzeigersinn in die jeweilige Stellposition verschwenkt wird.

Wenn der Stellhebel 28 aus der in Fig. 6 strichpunktiert dargestellten Positionierung in die mit einer ausgezogenen Linie dargestellte Positionierung zurückgeschwenkt wird, folgt dieser Schwenkbewegung unter dem Einfluß der Rückstellkraft F der Rückstellfeder 26 auch der Übertragungshebel 13.1, während die zweite Sperrklinke 13 aufgrund der noch zwischen dem Endanschlag 15 und der Nase der Sperrklinke 13 wirkenden Reibkraft und infolge der möglichen Relativverdrehung des Übertragungshebels 13.1 gegenüber der Sperrklinke 13 in der Verriegelungsstellung verbleibt. Sobald jedoch unter dem Einfluß der Umkehrung der Wirkungsrichtung der Massen- und Gaskräfte der Exzenterring 10 mit seinem Anschlag 14 in Richtung auf die Sperrklinke 12 verdreht wird, kann die Sperrklinke 13 unter dem Einfluß der Vorspannung der Andruckfeder 25 in die in Fig. 6 dargestellte Position zurückspringen und so den Anschlag 15 freigeben.

In zweckmäßiger Weise ist der Bereich an der Umfangsfläche des Exzenterringes 10, der jeweils bei einer Verdrehung in Verriegelungsstellung der zugeordneten Sperrklinke 12. bzw. 13 dem zugeordneten Endanschlag 14 bzw. 15 vorgeordnet ist, mit wenigstens einem Zwischenanschlag versehen. Damit ist sichergestellt, daß die Verdrehung des Exzenterringes 10 schrittweise zuverlässig bis in die jeweilige, durch den jeweiligen Endanschlag 14 bzw. 15 definierte Verriegelungsstellung erfolgt.

Hierbei wird mit Vorteil ausgenutzt, daß die außer Eingriff gebrachte Sperrklinke 14 bzw. 15 vollständig von der Umfangsfläche des Exenterringes 10 abhebt, während die für die Verriegelung aktivierte Sperrklinke unter Federdruck anliegt und in den vorbeidrehenden Zwischenanschlag nach Art einer Ratsche einrasten kann.

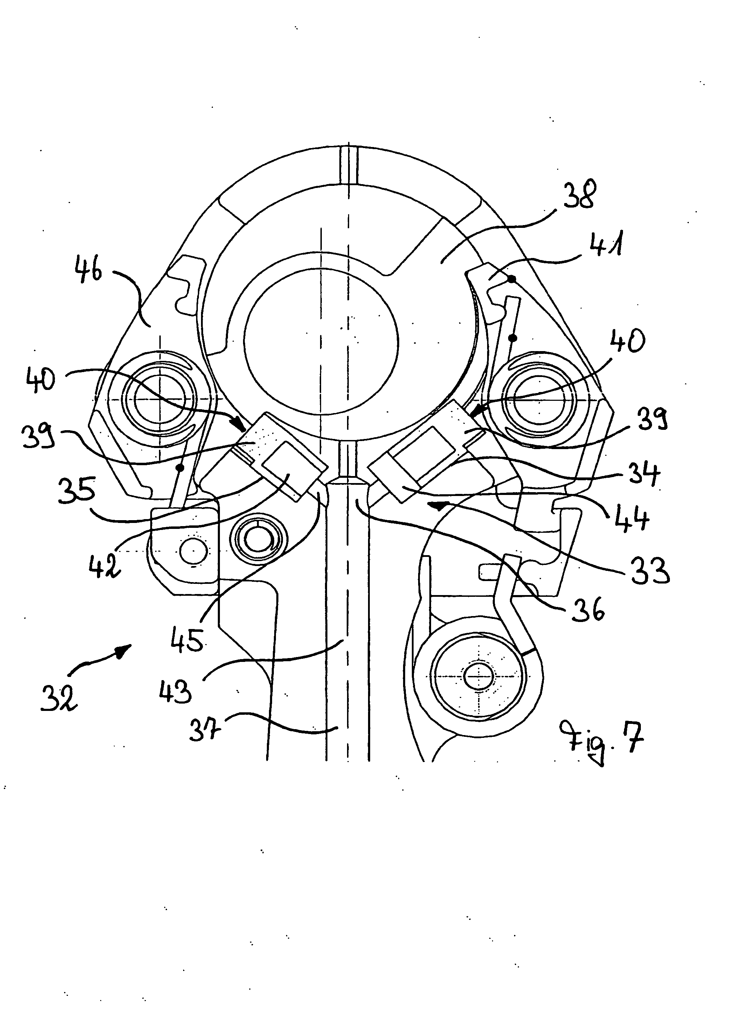

Fig. 7 zeigt ein zweites Pleuel 32 in einem Ausschnitt. Das zweite Pleuel 32 weist eine Dämpfungseinrichtung 33 auf. Die Dämpfungseinrichtung hat beispielhaft einen ersten Zylinder 34 und einen zweiten Zylinder 35, die jeweils als Dämpfungselement wirken. Beide Zylinder 34, 35 sind über eine Leitung 36 miteinander verbunden. Die Leitung 36 ist vorzugsweise zumindest teilweise Bestandteil eines Schmierölkanals 37, über den ein Exzenter 38 mit Schmieröl versorgt werden kann. Der Schmierölkanal 37 ist vorzugsweise im Pleuel 32 mittig angeordnet, so daß möglichst keine ungleichen Massenverteilungen über einen Querschnitt des Pleuels 32 entstehen. Die Zylinder 34, 35 als Dämpfungselemente weisen jeweils einen verfahrbaren Kolben 39 auf. Die Kolben 39 haben eine Anschlagfläche 40, auf die der Exzenter 38 auftreffen kann. In der in Fig. 7 dargestellten Position des Exzenters 38 dient die Anschlagfläche 40 des zweiten Zylinders 35 als Gegenstück zu einer dritten Sperrklinke 41, die die Drehbewegung des Exzenters 38 in die zur Anschlagfläche 40 entgegengesetzte Drehrichtung sperrt. Der Kolben 39 des zweiten Zylinders 35 befindet sich dabei in einer eingefahrenen Position. Im zweiten Zylinder 35 befindet sich nur noch in einem Hohlraum 42 im Kolben 39 ein Druckübertragungsfluid 43. Das Druckübertragungsfluid 43 ist vorzugsweise Öl, welches über den Schmierölkanal 37 unter Druck stehend zugeführt wird. Der Druck ist insbesondere derart, daß im Zusammenspiel mit den Zylindern 34, 35 eine Dämpferwirkung für den in Drehbewegung befindlichen Exzenter 38 bewirkt wird. Als Dämpfungsvolumen wirkt dabei der Hohlraum 42 wie auch das durch Ausfahren des Kolbens 39 aus dem jeweiligen Zylinder 34, 35 vorhandene Zusatzvolumen 44. Als Drosselstelle zwischen den Zylindern 34, 35 und dem Schmierölkanal 37 wirkend ist eine vorzugsweise kalibrierte Bohrung 45 jeweils an einem der Zylinder 34, 35 angeordnet. Durch die Bohrung 45, die als kalibrierte Öffnung wirkt, wird das Zusatzvolumen 44 hindurchgeschoben, wobei aufgrund der verkleinerten Öffnung der Bohrung 45 eine Dämpfung des auf eine Anschlagfläche 40 auftreffenden Exzenters 38 bewirkt wird. Der Kolben 39 wirkt somit als veränderlicher Anschlag für den Exzenter 38, der eine Verlangsamung des Exzenters 38 bewirkt, bis dieser in eine Endanschlagsstellung bei eingezogenem Kolben 39 gelangt und dabei über die dritte Sperrklinke 41 bzw. vierte Sperrklinke 46 auch in die andere Drehrichtung verdrehsicher gehalten wird.

Über die Auslegung des Zylinders und insbesondere des Kolbens im Zusammenspiel mit der Bohrung kann die Dämpfungseigenschaft ausgelegt werden. Gemäß einer Ausgestaltung weisen beide Dämpfungselemente die gleiche Dämpfungseigenschaft auf. Gemäß einer anderen Ausgestaltung sind die Dämpfungseigenschaften beider Dämpfungselemente unterschiedlich. Eine unterschiedliche Dämpfungseigenschaft kann beispielsweise mittels unterschiedlicher Kolbengeometrien geschaffen werden. Beispielsweise können die Hohlräume 42 unterschiedlich sein, was beispielsweise unterschiedliche Gewichte und damit Massenträgheitsmomente der Kolben bewirkt. Auch können die Bohrungen und damit wirkenden Öffnungen unterschiedlich sein. Beispielsweise können die Bohrungen unterschiedliche Längen aufweisen, so daß bei einer der beiden Bohrungen eine Dämpfung entsprechend einer Blende und bei der anderen Bohrung eine Dämpfung entsprechend einer Kombination von einer Blende mit angeschlossenem Kanal erfolgt.

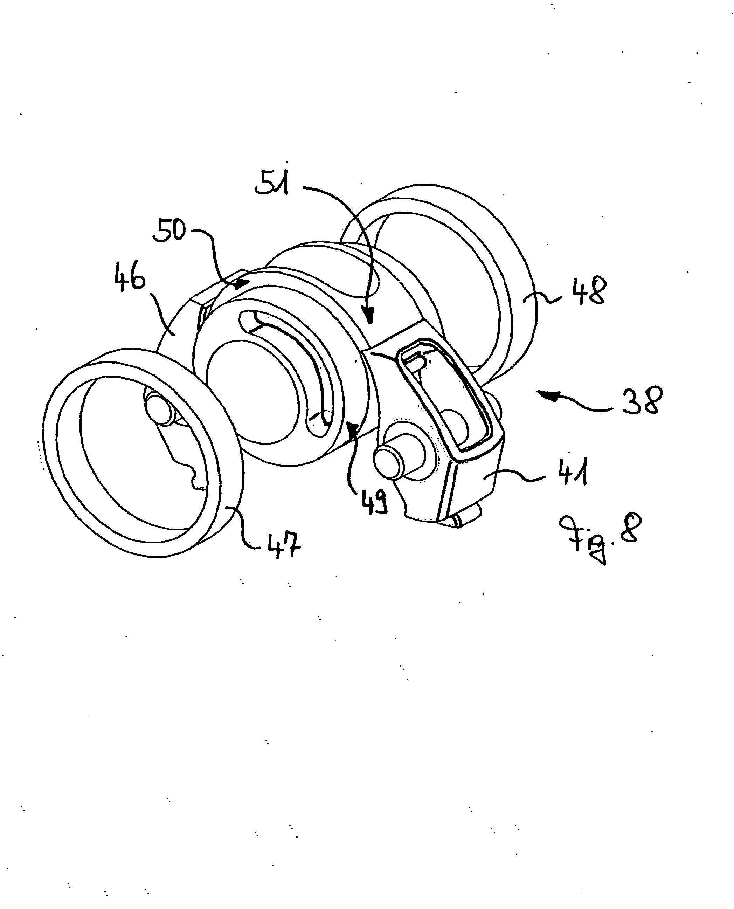

Fig. 8 zeigt eine Explosionsdarstellung des Exzenters 38, wie er beispielsweise aus Fig. 7 hervorgeht. Der Exzenter 38 weist in radialer Richtung angeordnet die dritte Sperrklinke 41 und die vierte Sperrklinke 46 auf. In axialer Richtung des Exzenters 38 sind einander entgegengesetzt ein erster Lagerring 47 und ein zweiter Lagerring 48 angeordnet. Die Abmessungen der beiden Lagerringe 47, 48 sind in diesem Beispiel gleich gewählt. Der Exzenter 38 weist für die beiden Lagerringe 47, 48 jeweils eine radiale Anlagefläche 49 und eine axiale Anlagefläche 50 auf. Beispielsweise kann der erste Lagerring 47 auf den Exzenter 38 axial aufgeschoben werden, wobei die axiale Anlagefläche 50 als Anschlag dient. Vorzugsweise dient die radiale Anlagefläche 49 im Zusammenspiel mit dem Lagerring 47, 48 zur Bildung einer Preßpassung oder Spielpassung, in Abhängigkeit davon, ob der Lagerring 47 eine Drehbewegung in bezug auf den Exzenter 38 ausführen können soll oder nicht. Vorzugsweise sind die Lagerringe 47, 48 mit einem Außendurchmesser versehen, der mit einem Außendurchmesser des Exzenters 38 übereinstimmt. Dafür ist die radiale Anlagefläche 49 nach innen eingezogen. Vorzugsweise ergibt sich durch das Einziehen der radialen Anlagefläche 49 ein bündiges Abschließen zwischen den Außenflächen der Lagerringe 47, 48 und der Außenfläche 51 des Exzenters 38. Insbesondere läßt sich durch eine entsprechende Gestaltung des Exzenters 38 bzw. Anpassung der Dimensionierung der Lagerringe ein gewünschtes Gesamtmassenträgheitsmoment einstellen, wodurch für unterschiedliche Pleuel durch einfache Anpassung dieser Bauteile entsprechende Massenträgheitsmomente des Exzenters 38 erzielt werden können.

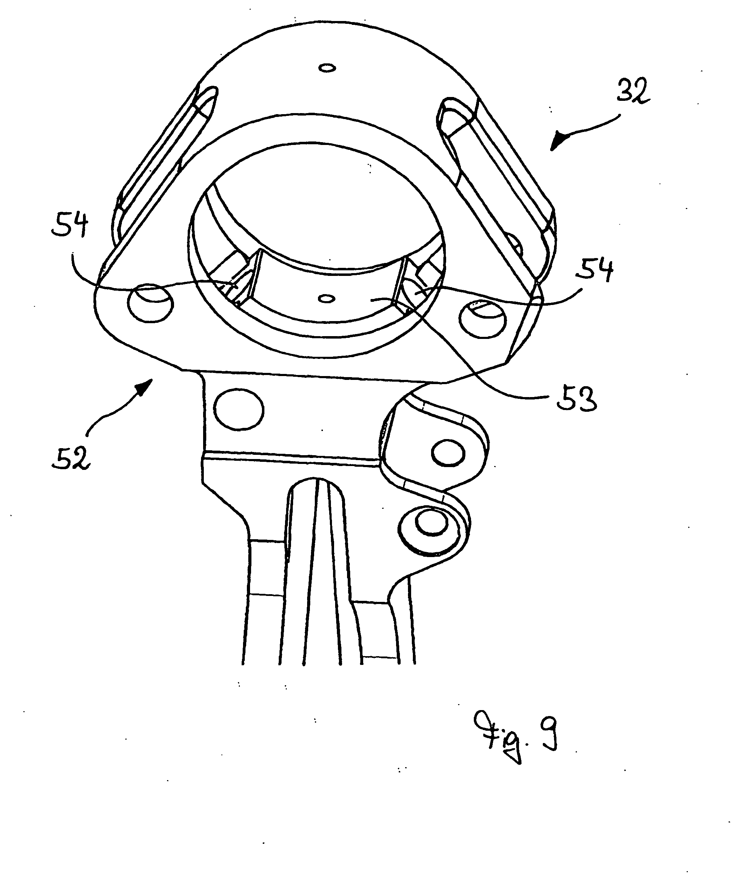

Fig. 9 zeigt einen Ausschnitt des zweiten Pleuels 32, wie er beispielsweise aus Fig. 7 hervorgeht. Das zweite Pleuel 32 weist ein kleines Pleuelauge 52 auf, das vorzugsweise aus Vollmaterial oder gesintertem Material hergestellt wird. Das kleine Pleuelauge 52 weist einen fest damit verbundenen Anschlag 53 auf, der kein einzelnes, abtrennbares Bauelement des Pleuelauges 52 ist. Vorzugsweise ist der Anschlag 53 stofflich mit anderen, umgebenden Elementen verbunden. Der Anschlag 53 weist Aufnehmungen 54 auf, in die nicht näher dargestellte Dämpfungselemente wie beispielsweise Kolben eingesetzt werden können. Eine Dämpfung kann jedoch auch beispielsweise über entsprechende Federelemente oder anderes erfolgen. In das Pleuelauge 52 kann beispielsweise der Exzenter 38 aus Fig. 8 eingesetzt werden. Dieser wird dazu axial in das Pleuelauge 52 eingeschoben. Anschließend können die Lagerringe 47, 48 ebenfalls axial eingesetzt werden, so daß dadurch der Exzenter 38 im Pleuelauge 52 gehalten wird. Vorzugsweise ist der dargestellte Bereich des Pleuelauges 52 einstückig, wodurch hohe Festigkeitswerte erzielt werden können.

Die vorstehend beschriebenen Ausführungsbeispiele stellen jeweils eine bevorzugte Ausführungsform dar. Konstruktive Abwandlungen innerhalb der Offenbarung der Anmeldung wie auch Kombinationen verschiedener Merkmale zu weiteren Ausgestaltungen sind möglich.

## Patentansprüche

1. Pleuel zur Verwendung an einer Hubkolbenmaschine mit veränderbar einstellbarem Verdichtungsverhältnis, mit einer Pleuelstange (6), die an einem Ende ein Hubzapfenlagerauge (7) und am anderen Ende ein Kolbenbolzenlagerauge (9) aufweist, mit dem ein Kolben (2) über einen Kolbenbolzen (8) verbindbar ist, der mit seiner Bolzenachse (A) unter einer Exzentrizität e exzentrisch zur Achse (B) des Kolbenbolzenlagerauges (9) in einem Exzenterring (10) gelagert ist, **dadurch gekennzeichnet, dass** der Exzenterring (10) um einen vorgegebenen Schwenkbereich unter Nutzung der Frei wirkenden Wassenkräfte frei hin und her drehbar im Kolbenbolzenlagerauge (9) gelagert ist, mit an der Pleuelstange (6) gelagerten Verriegelungsmitteln (11) zur wahlweisen Fixierung des Exzenterringes (10) in der einen oder anderen Endstellung des Schwenkbereichs und mit von außen über ein Einwirkelement (17) einer Aktuatoreinrichtung (18) betätigbaren Stellmitteln, die mit den Verriegelungsmitteln (11) in Wirkverbindung stehen.

2. Pleuel nach Anspruch 1, **dadurch gekennzeichnet, daß** der Schwenkbereich des Exzenterringes (10) in bezug auf die Längsachse der Pleuelstange (6) so positioniert ist, daß die durch die Exzentrizität e vorgegebene Verbindungslinie zwischen der Achse (B) des Kolbenbolzenlagerauges (9) und der Bolzenachse (A) in jeder Endlagenstellung des Exzenterringes (10) unter einem Winkel zur Längsachse der Pleuelstange (6) ausgerichtet ist.

3. Pleuel nach Anspruch 1 oder 2, **dadurch gekennzeichnet, daß** das Verriegelungsmittel zwei am Exzenterring (10) angeordnete Endanschläge (14, 15) und wenigstens eine an der Pleuelstange (6) schwenkbar gelagerte Sperrklinke (12, 13) aufweist.

4. Pleuel nach einem der Ansprüche 1 bis 3, **dadurch gekennzeichnet, daß** der Exzenterring (10) mit einem Stützzapfen (23) versehen ist, dem eine in Umfangsrichtung am Kolbenbolzenlagerauge (9) verlaufende Ausnehmung (20) zugeordnet ist, deren beide Endflächen (21, 22) als Anschlagflächen für den Stützzapfen (23) dienen und den Schwenkbereich begrenzen.

5. Pleuel nach Anspruch 3, **dadurch gekennzeichnet, daß** die Sperrklinke (12, 13) mit einer Andruckfeder (24, 25) in wirkverbindung steht, deren Andruckkraft gegen den Exzenterring (10) gerichtet ist.

6. Pleuel nach einem der vorhergehenden Ansprüche, **dadurch gekennzeichnet, daß** am Exzenterring (10) zwei jeweils den Schwenkbereich begrenzende Endanschläge (14, 15) und an der Pleuelstange (6) zwei Sperrklinken (12, 13) angeordnet sind, die in ihrer Sperrwirkung gegeneinander gerichtet sind, wobei jeweils eine Sperrklinke (12, 13) mit einem Endanschlag (14, 15) wahlweise in Eingriff bringbar ist.

7. Pleuel nach Anspruch 6, **dadurch gekennzeichnet, daß** das Stellmittel einen wahlweise mit der einen oder der anderen Sperrklinke (12, 13) in wirkverbindung bringbaren Stellhebel (28) aufweist.

8. Pleuel nach Anspruch 6 oder 7, **dadurch gekennzeichnet, daß** die Wirkverbindung des Stellhebels (28) mit den Sperrklinken (12, 13) so gestaltet ist, daß jeweils in einer Endstellung die eine Sperrklinke (12, 13) bei Einwirkung durch den Stellhebel (28) außer Eingriff mit dem zurgehörigen Endanschlag (14, 15) gebracht wird und gleichzeitig die andere Sperrklinke (12, 13) in Verriegelungsposition verschwenkt wird.

9. Pleuel nach einem der vorhergehenden Ansprüche 6 bis 8, **dadurch gekennzeichnet, daß** - bezogen auf die Drehrichtung und die untere Totpunktstellung der Kurbelwelle - die erste Sperrklinke (12) auf der vorlaufenden Seite der Pleuelstange (6) und die zweite Sperrklinke (13) auf der nachlaufenden Seite der Pleuelstange (6) angeordnet ist.

10. Pleuel nach einem der vorhergehenden Ansprüche 3 bis 9, **dadurch gekennzeichnet, daß** eine erste Sperrklinke (12) starr mit einem Übertragungshebel (12.1) verbunden ist, der gegen die Kraft der Andruckfeder (24) über den Stellhebel (28) verschwenkbar ist.

11. Pleuel nach einem der vorhergehenden Ansprüche 3 bis 10, **dadurch gekennzeichnet, daß** eine zweite Sperrklinke (13) mit ihrer Andruckfeder (25) begrenzt schwenkbar an einem Übertragungshebel (13.1) gelagert ist, der an der Pleuelstange (6) gelagert und der gegen die Kraft einer Rückstellfeder (26) über den Stellhebel (28) gegen den Exzenterring (10) verschwenkbar ist.

12. Pleuel nach einem der vorhergehenden Ansprüche, **dadurch gekennzeichnet, daß** zwischen der Pleuelstange (6) und einem Stellhebel (28) ein in Sperrstellung wirksames federbelastetes Rastelement (30) vorgesehen ist, das den Stellhebel (28) im Betrieb in seiner jeweiligen Stellposition hält.

13. Pleuel nach einem der vorhergehenden Ansprüche, **dadurch gekennzeichnet, daß** eine Stellhebel (28) mit einem Eingriffselement (26) in Verbindung steht, das mit dem Einwirkelement (17) der Aktuatoreinrichtung (18) in Wirkverbindung bringbar ist.

14. Pleuel nach einem der vorhergehenden Ansprüche, **dadurch gekennzeichnet, daß** jedem Endanschlag (14, 15) wenigstens ein Zwischenanschlag - bezogen auf eine Drehung des Exzenterringes (10) in seine Verriegelungsstellung - vorgeordnet ist.

15. Pleuel nach einem der vorhergehenden Ansprüche, **dadurch gekennzeichnet, dass** das Pleuel eine Dämpfungseinrichtung (33) zur Dämpfung einer Drehbewegung des Exzenterringes (10) aufweist.

16. Pleuel nach einem der vorhergehenden Ansprüche, **dadurch gekennzeichnet, dass** ein Exzenter (38) eine nach Innen gezogene Anlagefläche (49, 50) aufweist.

17. Pleuel nach einem der vorhergehenden Ansprüche, **dadurch gekennzeichnet, dass** ein Pleuelauge (52) einen integrierten Anschlag (53) aufweist.

18. Pleuel nach einem der vorhergehenden Ansprüche, **dadurch gekennzeichnet, dass** eine Sperrklinke (12, 13) einen Massenschwerpunkt aufweist, der zumindest nahe einer Drehachse der Sperrklinke (12, 13) angeordnet ist.

19. Kolbenmaschine mit Mitteln zur Veränderung des Verdichtungsverhältnisses, deren Kolben (2) mit der Kurbelwelle (5) jeweils über Pleuel (3) verbunden sind, die wenigstens eines der Merkmale der Ansprüche 1 bis 18 aufweisen, **dadurch gekennzeichnet, daß** jedem Zylinder (2) ein Einwirkelement (17) zugeordnet ist, das mit einer zugeordneten Aktuatoreinrichtung (18) verbunden ist und das in bezug auf den jeweiligen Zylinder (2) so angeordnet ist, daß es mit dem Eingriffselement (26) am Pleuel (3) in Wirkverbindung bringbar ist, wenn der mit dem Pleuel (3) verbundene Kolben (2) den Bereich seiner unteren Totpunktstellung durchläuft

## Claims

1. A connecting-rod assembly for use in a reciprocating piston engine with a variably adjustable compression ratio, comprising a connecting rod (6) which bears at one end a crankpin bearing eye (7) and at the other end a gudgeon-pin bearing eye (9), to which gudgeon-pin bearing eye a piston (2) can be connected via a gudgeon pin (8) which is mounted with its pin axis (A) at an eccentricity e eccentrically to the axis (B) of the gudgeon-pin bearing eye (9) in an eccentric ring (10), **characterised in that** the eccentric ring (10) is mounted to rotate freely back and forth in the gudgeon-pin bearing eye (9) in a predetermined pivoting range utilising the freely acting forces of gravity, comprising locking means (11) mounted on the connecting rod (6) for selectively fixing the eccentric ring (10) in one or the other end position of the pivoting range and comprising adjusting means which can be actuated from the outside via an acting element (17) of an actuator means (18) and which are in an operative connection with the locking means (11).

2. A connecting-rod assembly according to Claim 1, **characterised in that** the pivoting range of the eccentric ring (10) is positioned relative to the longitudinal axis of the connecting rod (6) such that the connecting line, predetermined by the eccentricity e, between the axis (B) of the gudgeon-pin bearing eye (9) and the pin axis (A) in each end position of the eccentric ring (10) is oriented at an angle to the longitudinal axis of the connecting rod (6).

3. A connecting-rod assembly according to Claim 1 or 2, **characterised in that** the locking means comprises two end stops (14, 15) located on the eccentric ring (10) and at least one detent pawl (12, 13) pivotably mounted on the connecting rod (6).

4. A connecting-rod assembly according to one of Claims 1 to 3, **characterised in that** the eccentric ring (10) is provided with a supporting pin (23), with which is associated a recess (20) extending in the peripheral direction on the gudgeon-pin bearing eye (9), the two end surfaces (21, 22) of which serve as stop surfaces for the supporting pin (23) and limit the pivoting range.

5. A connecting-rod assembly according to Claim 3, **characterised in that** the detent pawl (12, 13) is in an operative connection with a contact pressure spring (24, 25), the contact pressure force of which is directed against the eccentric ring (10).

6. A connecting-rod assembly according to one of the preceding claims, **characterised in that** two end stops (14, 15) each limiting the pivoting range are located on the eccentric ring (10) and two detent pawls (12, 13) on the connecting rod (6), which are directed against one another in their detent action, each detent pawl (12, 13) being selectively able to be brought into engagement with one end stop (14, 15).

7. A connecting-rod assembly according to Claim 6, **characterised in that** the adjusting means have an adjusting lever (28) which can selectively be brought into an operative connection with one or the other detent pawl (12, 13).

8. A connecting-rod assembly according to Claim 6 or 7, **characterised in that** the operative connection of the adjusting lever (28) with the detent pawls (12, 13) is designed such that in each case in one end position one detent pawl (12, 13) is disengaged from the associated end stop (14, 15) when acted upon by the adjusting lever (28) and at the same time the other detent pawl (12, 13) is pivoted into the locking position.

9. A connecting-rod assembly according to one of the preceding Claims 6 to 8, **characterised in that** - relative to the direction of rotation and the lower dead centre position of the crankshaft - the first detent pawl (12) is located on the leading side of the connecting rod (6) and the second detent pawl (13) on the trailing side of the connecting rod (6).

10. A connecting-rod assembly according to one of the preceding Claims 3 to 9, **characterised in that** a first detent pawl (12) is rigidly connected to a transmission lever (12.1) which can be pivoted counter to the force of the contact pressure spring (24) by means of the adjusting lever (28).

11. A connecting-rod assembly according to one of the preceding Claims 3 to 10, **characterised in that** a second detent pawl (13) is mounted in limitedly pivotable manner with its contact pressure spring (25) on a transmission lever (13.1) which is mounted on the connecting rod (6) and which can be pivoted counter to the force of a restoring spring (26) by means of the adjusting lever (28) against the eccentric ring (10).

12. A connecting-rod assembly according to one of the preceding claims, **characterised in that** a spring-loaded catch element (30) which is effective in the detent position is provided between the connecting rod (6) and an adjusting lever (28), which element holds the adjusting lever (28) in its respective adjusting position during operation.

13. A connecting-rod assembly according to one of the preceding claims, **characterised in that** an adjusting lever (28) is connected to an engagement element (26) which can be brought into an operative connection with the acting element (17) of the actuator means (18).

14. A connecting-rod assembly according to one of the preceding claims, **characterised in that** each end stop (14, 15) is preceded by at least one intermediate stop, relative to a rotation of the eccentric ring (10) into its locking position.

15. A connecting-rod assembly according to one of the preceding claims, **characterised in that** the connecting-rod assembly has a damping means (33) for damping a rotational movement of the eccentric ring (10).

16. A connecting-rod assembly according to one of the preceding claims, **characterised in that** one eccentric (38) has a contact surface (49, 50) which is drawn inwards.

17. A connecting-rod assembly according to one of the preceding claims, **characterised in that** one connecting-rod eye (52) bears an integrated stop (53).

18. A connecting-rod assembly according to one of the preceding claims, **characterised in that** one detent pawl (12, 13) has a mass centre which is arranged at least close to one axis of rotation of the detent pawl (12, 13).

19. A piston engine comprising means for changing the compression ratio, the pistons (2) of which are connected to the crankshaft (5) in each case via connecting-rod assemblies (3) which have at least one of the features of Claims 1 to 18, **characterised in that** an acting element (17) is associated with each cylinder (2), which element is connected to an associated actuator means (18) and which is arranged relative to the respective cylinder (2) such that it can be brought into an operative connection with the engagement element (26) on the connecting-rod assembly (3) if the piston (2) connected to the connecting-rod assembly (3) passes through the region of its lower dead centre position.

## Revendications

1. Bielle pour machine à pistons alternatifs avec taux de compression variablement réglable, dotée d'une bielle motrice (6) présentant un oeillet de palier de tourillon de levage (7) à une extrémité, et un oeillet de palier d'axe de piston (9) à l'autre extrémité, pouvant relier un piston (2) à l'aide d'un axe de piston (8), qui est placé dans un anneau d'excentrique (10) avec son axe de tourillon (A) sous une excentricité e excentriquement à l'axe (B) de l'oeillet de palier d'axe de piston (9), **caractérisée en ce que** l'anneau d'excentrique (10) est placé de manière à pivoter librement d'avant en arrière dans l'oeillet de palier d'axe de piston (9) autour d'une zone pivotante prédéfinie en utilisant les forces inertielles agissant librement, avec des moyens de verrouillage (11) placés sur la bielle motrice (6) pour fixer l'anneau d'excentrique (10) au choix dans l'une ou l'autre position finale de la zone pivotante et avec des moyens de réglage pouvant être actionnés de l'extérieur par un élément actif (17) d'un dispositif d'actuateur (18) et reliés aux moyens de verrouillage (11).

2. Bielle selon la revendication 1, **caractérisée en ce que** la zone pivotante de l'anneau d'excentrique (10) est positionnée de telle sorte par rapport à l'axe longitudinal de la bielle motrice (6) que la ligne de jonction prédéfinie par l'excentricité e entre l'axe (B) de l'oeillet de palier d'axe de piston (9) et l'axe de tourillon (A) est orientée dans chaque position finale de l'anneau d'excentrique (10) sous un angle par rapport à l'axe longitudinal de la bielle motrice (6).

3. Bielle selon la revendication 1 ou 2, **caractérisée en ce que** le moyen de verrouillage présente deux butées terminales (14, 15) disposées sur l'anneau d'excentrique (10) et au moins un cliquet d'arrêt (12, 13) placé de manière pivotante sur la bielle motrice (6).

4. Bielle selon l'une des revendications 1 à 3, **caractérisée en ce que** l'anneau d'excentrique (10) est muni d'un tourillon support (23) auquel est attribué un évidement (20) passant dans le sens circonférentiel de l'oeillet de palier d'axe de piston (9), évidement dont les deux surfaces terminales (21, 22) servent de surfaces de butées pour le tourillon support (23) et limitent la zone pivotante.

5. Bielle selon la revendication 3, **caractérisée en ce que** le cliquet d'arrêt (12, 13) est relié à un ressort de pression (24, 25), dont la force de pression est orientée contre l'anneau d'excentrique (10).

6. Bielle selon l'une des revendications précédentes, **caractérisée en ce que** deux butées terminales (14, 15) limitant la zone pivotante sont disposées sur l'anneau d'excentrique (10), et deux cliquets d'arrêt (12, 13), orientés l'un contre l'autre dans leur effet de blocage, sont disposés sur la bielle motrice (6), un cliquet d'arrêt (12, 13) pouvant être amené en prise avec une butée terminale (14, 15) au choix.

7. Bielle selon la revendication 6, **caractérisée en ce que** le moyen de réglage présente un levier de réglage (28) pouvant être relié au choix à l'un ou l'autre des cliquets d'arrêt (12, 13).

8. Bielle selon la revendication 6 ou 7, **caractérisée en ce que** la liaison du levier de réglage (28) et des cliquets d'arrêt (12, 13) est réalisée de telle sorte que l'un des cliquets d'arrêt (12, 13), dans une position finale, est désengagé de la butée finale (14, 15) correspondante en faisant agir le levier de réglage (28) et simultanément l'autre cliquet d'arrêt (12, 13) est pivoté en position de verrouillage.

9. Bielle selon l'une des revendications précédentes 6 à 8, **caractérisée en ce que** - par rapport au sens de rotation et à la position inférieure de point mort du vilebrequin - le premier cliquet d'arrêt (12) est disposé sur le côté avant de la bielle motrice (6) et le deuxième cliquet d'arrêt (13) sur le côté arrière de la bielle motrice (6).

10. Bielle selon l'une des revendications précédentes 3 à 9, **caractérisée en ce qu'**une premier cliquet d'arrêt (12) est relié de manière rigide à un levier de transmission (12.1) pouvant pivoter contre la force du ressort de pression (24) à l'aide du levier de réglage (28).

11. Bielle selon l'une des revendications précédentes 3 à 10, **caractérisée en ce qu'**un deuxième cliquet d'arrêt (13) est placé avec son ressort de pression (25) de manière limitée en rotation sur un levier de transmission (13.1), placé sur la bielle motrice (6) et pivotant contre la force d'un ressort de rappel (26) à l'aide du levier de réglage (28) contre l'anneau d'excentrique (10).

12. Bielle selon l'une des revendications précédentes, **caractérisée en ce qu'**un élément d'encliquetage (30), contraint par ressort agissant en position de blocage, est prévu entre la bielle motrice (6) et un levier de réglage (28), et maintient le levier de réglage (28) en fonctionnement dans sa position de réglage respective.

13. Bielle selon l'une des revendications précédentes, **caractérisée en ce qu'**un levier de réglage (28) est relié à un élément de prise (26) qui peut être amené en liaison avec l'élément actif (17) du dispositif d'actuateur (18).

14. Bielle selon l'une des revendications précédentes, **caractérisée en ce qu'**au moins une butée intermédiaire - par rapport à une rotation de l'anneau d'excentrique (10) dans sa position verrouillée - est placée avant chaque butée terminale (14, 15).

15. Bielle selon l'une des revendications précédentes, **caractérisée en ce que** la bielle présente un dispositif d'amortissement (33) pour amortir un mouvement de rotation de l'anneau d'excentrique (10).

16. Bielle selon l'une des revendications précédentes, **caractérisée en ce qu'**un excentrique (38) présente une surface d'appui (49, 50) tirée vers l'intérieur.

17. Bielle selon l'une des revendications précédentes, **caractérisée en ce qu'**une tête de bielle (52) présente une butée intégrée (53).

18. Bielle selon l'une des revendications précédentes, **caractérisée en ce qu'**un cliquet d'arrêt (12, 13) présente un centre de gravité de masse disposé au moins à proximité d'un axe de rotation du cliquet d'arrêt (12, 13).

19. Machine à pistons dotée de moyens pour modifier le taux de compression, dont les pistons (2) sont reliés au vilebrequin (5) par une bielle (3), qui présentent au moins l'une des caractéristiques des revendications 1 à 18, **caractérisée en ce qu'**à chaque cylindre (2) est attribué un élément actif (17) relié à un dispositif d'actuateur (18) associé et disposé de telle sorte, par rapport à chaque cylindre (2), qu'il peut être relié à l'élément de prise (26) sur la bielle (3) lorsque le piston (2) relié à la bielle (3) traverse la zone sous sa position inférieure de point mort.
